# EUROPEAN PATENT SPECIFICATION

(11) **EP 1 523 400 B1**
(45) Date of publication and mention of the grant of the patent: **08.11.2006**
(21) Application number: 03750893.4
(22) Date of filing: 04.09.2003
(51) Int. Cl.: B26F 1/44, B23P 15/40, B29C 47/02, B32B 37/15

(54) **MATRIX ASSEMBLY**
MATRIZE
ENSEMBLE MATRICE

(30) Priority: 05.10.2002 GB 0223147
(43) Date of publication of application: 20.04.2005
(73) Proprietor: Man Mat Limited, Ballasalla IM9 2AJ (GB)
(72) Inventor: SNODGRASS, Francis Mattlage, Lytham St. Annes, Lancashire FY8 2QU (GB)
(74) Representative: McDonough, Jonathan
(86) International application number: PCT/GB2003/003835
(87) International publication number: WO 2004/030877

(56) References cited:
- EP-A- 0 107 490
- FR-A- 2 682 317
- US-A- 4 094 056
- US-A- 5 348 810
- PATENT ABSTRACTS OF JAPAN vol. 007, no. 020 (M-188), 26 January 1983 (1983-01-26) & JP 57 176143 A (IDEMITSU KOSAN KK), 29 October 1982 (1982-10-29)
- PATENT ABSTRACTS OF JAPAN vol. 015, no. 168 (M-1107), 26 April 1991 (1991-04-26) & JP 03 034832 A (HASHIMOTO FORMING IND CO LTD), 14 February 1991 (1991-02-14)

## Description

This invention relates to the scoring or creasing of card-like material and, more particularly, relates to a method of manufacturing a matrix assembly for use in forming creases or score lines in card-like material.

Card-like material is creased to facilitate it being folded into its final shape by pressing the material between a creasing rule of a cutting and creasing press, and a creasing matrix. The creasing matrix comprises a long flexible strip having a channel formed longitudinally therein which is slightly wider than the creasing rule. The matrix strip is fastened to a press platen so that its channel is aligned with the creasing edge so that on closing the press the rule edge urges the portion of the card comprising the crease into the matrix channel to provide a well defined crease. In our European patent publication number 0107490 there is disclosed a form of matrix assembly which is widely used in cutting and creasing presses. The matrix generally comprises a steel strip onto which has been extruded one or more strips of plastic material to define a channel running longitudinally of the strip, the plastic material being adhered to the strip by means of perforations formed therein to which the plastic material can "key". Documents US-A-4094056 of Takeda and FR-A-2682317 of Profil disclose processes for manufacturing plastic coated metal strips

Typically, the steel strips used in the above form of matrix are of one of two thicknesses, 0.10mm (0.004") and 0.15mm (0.006"). These thicknesses are required in order to give adequate strength owing to the presence of perforations. This thickness of steel strip required a reduction in the height of creasing rules used in cutting and creasing dies. Clearly it would be advantageous if a matrix could be formed of adequate strength which is sufficiently thin so as not to require modification of the height of the creasing rules of the cutting and creasing press.

The invention seeks to provide a method of forming a matrix, and a matrix so formed improved in the above respects. This is achieved by the method as defined by claim 1.

According to a first aspect of the present invention, there is provided a method of forming a matrix assembly which comprises providing a steel strip, treating the upper surface of the steel strip with a resin adhesive, extruding one or more plastic material strips onto the metal strip to define a longitudinal channel and heating the assembly so formed to cure the resin adhesive and adhere the plastic material to the metal strip.

The method of the invention obviates the need to perforate the metal strip and this leads to a number of advantages. Firstly, omitting the perforation step enables the matrix assembly to be produced more cheaply. Secondly, with there being no perforations present, it is possible to use a thinner steel strip (for example, of thickness 0.05mm (0.002")) and still retain adequate strength. This means that no modification need be made to the height of the creasing dies in a cutting and creasing press.

The surface of the previous matrix strip was rough owing to the presence of the perforations beneath the plastic, whereas the surface of the strip in accordance with the present invention is smooth, and there is therefore no embossing of board or card creased therewith. Furthermore, delamination, which could be caused with the previous matrix assembly when the strip was cut or mitred at the point of a perforation, now no longer occurs.

The absence of perforations also gives a longer running life and the plastic profile of the matrix assembly of the invention has an improved finish. Finally, waste is greatly reduced.

Preferably, the adhesive resin employed is a polyurethane or polyolefin resin. This is preferably applied to the surface of the steel strip in a continuous manner immediately before the latter passes into an extrusion die where the plastics material is attached thereto by extruding the plastic material profile onto the resin treated steel strip downstream of the extrusion die in a process called external crosshead extrusion. The advantage of this method is that the steel strip is not under significant pressure from plastic material in the crosshead die, allowing the use of thinner (e.g. 0.05mm (0.002")) steel without deformation, and because of the fact that the strip freely passes through the crosshead die, the tooling life is increased greatly. The plastic extrusions may be controlled and guided into position externally of the crosshead die by a series of horizontally and vertically micrometer adjustable heated precision rollers ensuring complete accuracy of size for both sides of the matrix, in respect of height, width and profile. Thereafter, the assembly passes to a heating zone to cure the adhesive resin and effect bonding of the matrix. Following this, the assembly is cooled, pulled off and further assembled in-line with a double-sided pressure sensitive adhesive tape to the bottom of the matrix, after which it is cut into suitable lengths for packaging and onward transmission.

The plastic material adhered to the steel strip may be any suitable plastics material, but is preferably polypropylene. The metallic material may also be any suitable metal, but is preferably steel. The strip may be conditioned and degreased before use, for example, using a propane torch or the like.

The invention will be described further, by way of example, with reference to the accompanying drawings, in which:
Figure 1 is a schematic diagram illustrating the method of the invention;

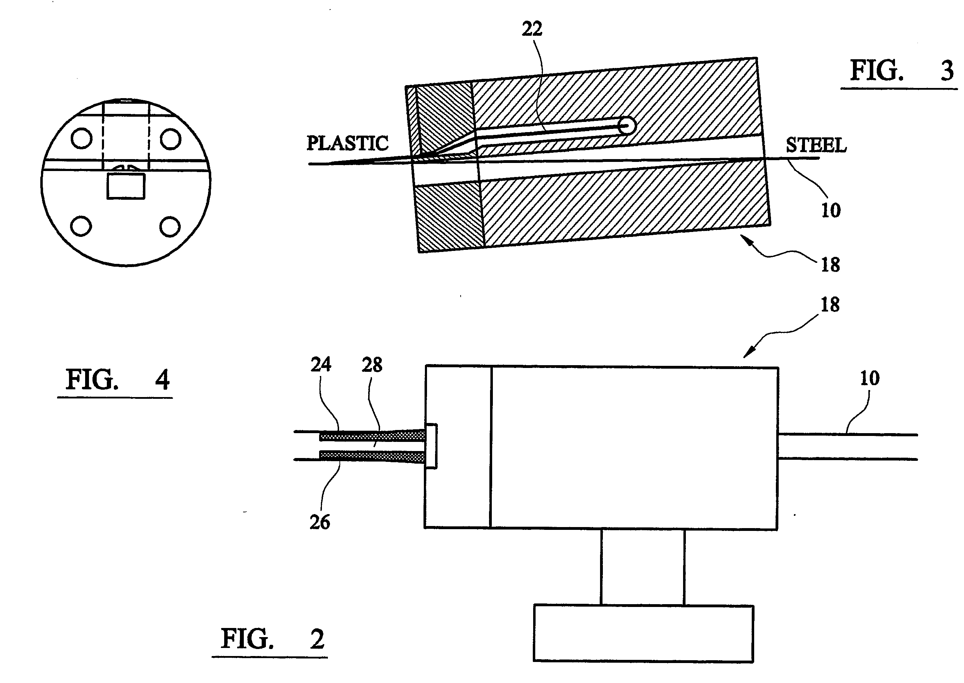

Figure 2 is a plan view of the die and adaptor on an enlarged scale;
Figure 3 is a cross-section of the die and adaptor; and
Figure 4 is a front elevation of the die.

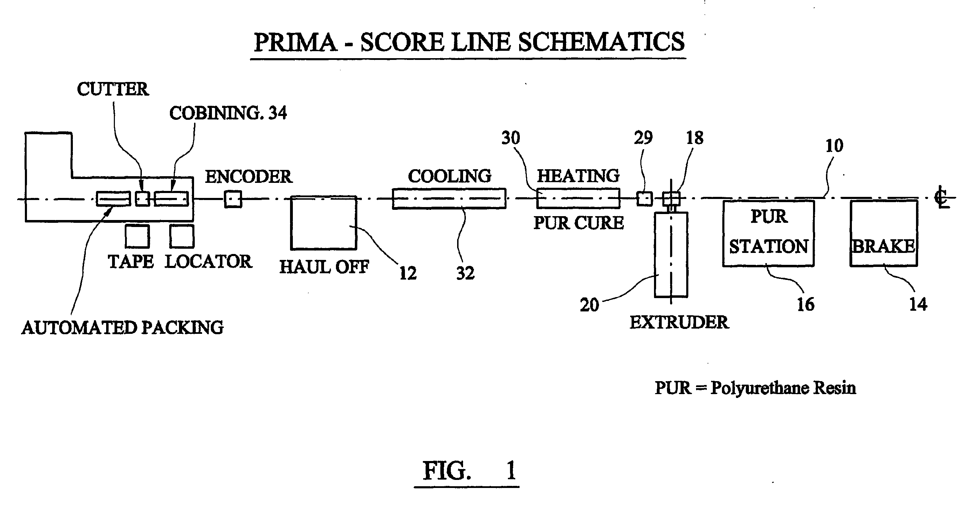

Referring to the drawings, and in particular Figure 1, a steel strip 10, which may have been preconditioned, is pulled between a haul off mechanism 12 and a brake mechanism 14. Between the latter devices it is treated in accordance with the invention as follows.

Firstly, the strip 10 enters a slot coat station 16 where polyurethane or a polyolefin hotmelt resin is applied to its upper surface. The strip 10 then passes into the die 18 portion of an extruder 20 where a polypropylene plastics material 22 is extruded onto the steel strip 10 to form two parallel longitudinal strips 24,26 defining between them a channel 28. The plastic extrusions may be controlled and guided into position externally of the crosshead die by a series of horizontally and vertically micrometer adjustable heated precision rollers in a roller station 29 ensuring complete accuracy of size for both sides of the matrix, in respect of height, width and profile.

The assembly then passes into a heating unit 30 where the polyurethane is cured, bonding the strips 24,26 to the metal strip 10 and forming the matrix assembly. The plastic material is preferably provided with a blowing agent, the latter helps stabilise the modified polypropylene preferably employed, eliminating shrinkage of the plastics material profile. The temperature of the extrusion and polyurethane cure zone 30 is preferably high, in the region of 250°C, to effect curing.

The assembly then passes into a cooling zone 32, preferably comprising a vortex for rapid cooling. Further cooling may be provided, after which the assembly advances to the haul off winder unit 12. The matrix is combined with a double-sided adhesive tape in a combining zone 34 where the tape is applied to the underside of the matrix strip 10. Thereafter, the matrix assembly may be encoded, cut into predetermined lengths and packaged as is known *per se.*

The absence of perforations in the metal strip 10 enables a thinner strip to be used than was heretofore possible and the finished matrix assembly is therefore thinner, whilst still having adequate strength. It can therefore be used in standard cutting and creasing presses without having to modify the cutter height.

## Claims

1. A method of making a creasing matrix assembly which comprises providing a steel strip (10), treating the upper surface of the steel strip with a resin adhesive, extruding one or more plastic material strips (24,26) onto the metal strip (10) to define a longitudinal channel (28) and heating the assembly so formed to cure the resin adhesive and adhere the plastic material (22) to the metal strip;
wherein the resin is applied to the surface of the steel strip (10) in a continuous manner immediately before the latter passes into an extrusion die (18) where the plastics material (22) is attached thereto by extruding the plastic material profile onto the resin treated steel strip downstream of the extrusion die.

2. A method as claimed in claim 1 wherein the adhesive resin employed is a polyurethane or polyolefin resin.

3. A method as claimed in any of claims 1 and 2 wherein the plastic extrusions (22) are controlled and guided into position externally of the extrusion die by a series of horizontally and vertically micrometer adjustable heated precision rollers (29).

4. A method as claimed in of claims 1 to 3 wherein after the plastics material is attached the assembly passes to a heating zone (30) to cure the adhesive resin and effect bonding of the matrix.

5. A method as claimed in any of claims 1 to 4 wherein after curing the resin the assembly is cooled (32), pulled off (12) and further assembled in-line (34) with a double-sided pressure sensitive adhesive tape to the bottom of the matrix, and thereafter cut into suitable lengths for packaging and onward transmission.

6. A method as claimed in any claims 1 to 5 wherein the plastic material (22) adhered to the steel strip is polypropylene.

7. A method as claimed in claim 6 wherein the strip (10) is conditioned and degreased before use.

## Patentansprüche

1. Verfahren zur Herstellung einer Falzmatrix-Anordnung, welches umfasst: Bereitstellen eines Stahlbandes (10), Behandeln der oberen Oberfläche des Stahlbandes mit einem Kunstharzklebstoff, Extrudieren eines oder mehrerer Streifen (24, 26) aus einem Kunststoffmaterial auf das Metallband (10), derart, dass ein longitudinaler Kanal (28) begrenzt wird, sowie Erwärmen der so gebildeten Anordnung, um den Kunstharzklebstoff zu trocknen und das Kunststoffmaterial (22) an das Metallband anzukleben;
wobei das Kunstharz auf kontinuierliche Art und Weise auf die Oberfläche des Stahlbandes (10) aufgetragen wird, unmittelbar bevor letzteres in ein Extrudierwerkzeug (18) eintritt, wo das Kunststoffmaterial (22) daran angebracht wird, indem das Profil aus Kunststoffmaterial stromab des Extrudierwerkzeugs auf das mit Kunstharz behandelte Stahlband aufgebracht wird.

2. Verfahren nach Anspruch 1, bei welchem der verwendete Kunstharzklebstoff ein Polyurethan- oder Polyolefinharz ist.

3. Verfahren nach einem der Ansprüche 1 bis 2, bei
welchem die Kunststoff-Extrusionsstränge (22) außerhalb des Extrudierwerkzeugs mittels einer Reihe von horizontal und vertikal im Mikrometerbereich einstellbaren erwärmten Präzisionswalzen (29) in Position gelenkt und geführt werden.

4. Verfahren nach einem der Ansprüche 1 bis 3, bei
welchem die Anordnung in eine Heizzone (30) eintritt, nachdem das Kunststoffmaterial aufgetragen ist, um den Kunstharzklebstoff zu trocknen und eine Bindung der Matrix zu bewirken.

5. Verfahren nach einem der Ansprüche 1 bis 4, bei
welchem die Anordnung nach dem Trocknen des Kunstharzes gekühlt (32), zuggefördert (12) und außerdem reihenweise (34) mit einem doppelseitigen druckempfindlichen Klebeband an der Unterseite der Matrix bestückt wird und hiernach in für die Verpackung und den weiteren Versand geeignete Längenstücke geschnitten wird.

6. Verfahren nach einem der Ansprüche 1 bis 5, bei
welchem das an das Stahlband geklebte Kunststoffmaterial (22) Polypropylen ist.

7. Verfahren nach Anspruch 6, bei welchem das Band (10) vor seiner Verwendung konditioniert und entfettet wird.

## Revendications

1. Procédé de réalisation d'un ensemble matrice de plissage qui comprend le fait de fournir une bande d'acier (10), de traiter la surface supérieure de la bande d'acier avec une résine adhésive, d'extruder une ou plusieurs bandes (24, 26) de matière plastique sur la bande métallique (10) pour définir un canal longitudinal (28) et de chauffer l'ensemble ainsi formé pour durcir la résine adhésive et coller la matière plastique (22) à la bande métallique ;
dans lequel la résine est appliquée sur la surface de la bande métallique (10) d'une manière continue immédiatement avant que cette dernière passe dans une matrice d'extrusion (18) où la matière plastique (22) est fixée à elle en extrudant le profilé de matière plastique sur la bande d'acier traitée à la résine en aval de la matrice d'extrusion.

2. Procédé selon la revendication 1, dans lequel la résine adhésive employée est une résine de polyuréthanne ou de polyoléfine.

3. Procédé selon l'une des revendications 1 et 2, dans lequel les extrusions de plastique (22) sont contrôlées et guidées en position a l'extérieur de la matrice d'extrusion par une série de rouleaux de précision chauffés (29) réglables horizontalement et verticalement de façon micrométrique.

4. Procédé selon l'une des revendications 1 à 3, dans lequel, après que la matière plastique a été fixée, l'ensemble passe dans une zone de chauffage (30) pour durcir la résine adhésive et effectuer une liaison de la matrice.

5. Procédé selon l'une des revendications 1 à 4, dans lequel, après le durcissement, l'ensemble est refroidi (32), détaché (12) et encore assemblé en ligne (34) avec une bande adhésive double face sensible à la pression sur le fond de la matrice, puis coupé en longueurs appropriées pour son emballage et sa transmission.

6. Procédé selon l'une des revendications 1 à 5, dans lequel a matière plastique (22) collée à la bande d'acier est du polypropylène.

7. Procédé selon la revendication 6, dans lequel la bande (10) est conditionnée et dégraissée avant utilisation.
